# EUROPEAN PATENT APPLICATION

(11) **EP 1 873 433 A1**
(43) Date of publication of application: **02.01.2008**
(21) Application number: 06731842.8
(22) Date of filing: 14.04.2006
(51) Int. Cl.: F16K 27/00

(54) **FLUID CONTROL DEVICE**

(30) Priority: 21.04.2005 JP 2005123875
(71) Applicant: FUJIKIN INCORPORATED, Osaka-shi, Osaka-fu 550-0012 (JP)
(72) Inventor: YAMAJI, Michio, FUJIKIN INCORPORATED, Osaka-shi, Osaka, 550-0012 (JP); SHINOHARA, Tsutomu, FUJIKIN INCORPORATED, Osaka-shi, Osaka, 550-0012 (JP); TOKUDA, Ichiro, FUJIKIN INCORPORATED, Osaka-shi, Osaka, 550-0012 (JP); TSUBOTA, Kenji, FUJIKIN INCORPORATED, Osaka-shi, Osaka, 550-0012 (JP)
(74) Representative: Paul, Dieter-Alfred
(86) International application number: PCT/JP2006/307906
(87) International publication number: WO 2006/115084

(57) **Abstract**

There is provided a fluid control apparatus which can reduce the number of components, thereby reducing the cost and improving the efficiency of assembling operations.

The fluid control apparatus includes a plurality of fluid control devices 11, 12, 13, 14 and 15 having a block-shaped main body having a flow path formed therethrough and a supporting member 16 for supporting the plurality of fluid control devices placed in serial. The supporting member 16 is provided with raised portions 18 and 19 at the opposite end portions thereof, and the main bodies of the plurality of fluid control devices are placed between the raised portions 18 and 19 of the supporting member 16 such that the openings of the flow paths therein are butted against one another. A main-body securing male-threaded member 21 penetrated through one raised portion 18 out of the raised portions in a longitudinal direction is screwed thereinto, so that the main bodies 11, 12a, 13a, 14a and 15a of the plurality of fluid control devices are secured to the supporting member.

## Description

### TECHNICAL FIELD

The present invention relates to a fluid control apparatus for use in a semiconductor fabrication device and the like and more particularly relates to a fluid control apparatus constituted by integrated a plurality of fluid control devices.

### BACKGROUND ART

Fluid control apparatuses for use in semiconductor fabrication devices have been increasingly integrated, by installing, in parallel on a base member, a plurality of lines formed by a plurality of fluid control devices placed in serial and connected to one another without interposing pipes and joints thereamong. Patent Literature 1 discloses, as a fluid control apparatus as described above, a fluid control apparatus which includes a plurality of block-shaped joint members which are mounted to a base member through male-threaded members and form a lower-stage layer and a plurality of fluid control devices which form an upper-stage layer and are mounted to the joint members such that the fluid control device straddle the joint members adjacent to one other.
Patent Literature 1: JP-A No. 10-227368

### SUMMARY OF THE INVENTION

### PROBLEMS TO BE SOLVED BY THE INVENTION

The fluid control apparatus disclosed in the patent literature 1 offers the advantage of the reduction of the space occupied by the apparatus and the reduction of the volumes of the flow paths, but has had the problem of increase of the number of components and, therefore, increase of the time required for assembling.

It is an object of the present invention to provide a fluid control apparatus which can reduce the number of components thereby reducing the cost and improving the efficiency of the assembling operations, while maintaining the performance regarding the space occupied by the apparatus and the volumes of the flow paths at the same level as conventional apparatuses.

### MEANS FOR SOLVING THE PROBLEMS

A fluid control apparatus according to a first aspect of the invention including a plurality of fluid control devices having a block-shaped main body having a flow path formed therethrough and a supporting member for supporting the plurality of fluid control devices placed in serial, wherein the supporting member is provided with raised portions at opposite end portions thereof, the main bodies of the plurality of fluid control devices are placed between the raised portions of the supporting member such that the openings of the flow paths therein are butted against one another, and a main-body securing male-threaded member penetrated through one of the raised portions in a longitudinal direction is screwed thereinto, so that the main bodies of the plurality of fluid control devices are mounted to the supporting member.

A fluid control apparatus according to a second aspect of the invention including an adjustment device for adjusting the pressure or a flow rate of a fluid, an inlet shutoff/open device provided near an inlet of the adjustment device, and an outlet shutoff/open device provided near an outlet of the adjustment device, the inlet shutoff/open device including a plurality of fluid control devices having a block-shaped main body having a flow path formed therethrough and an inlet supporting member for supporting the plurality of fluid control devices placed in serial, and the outlet shutoff/open device including a plurality of fluid control devices having a block-shaped main body having a flow path formed therethrough and an outlet supporting member for supporting the plurality of fluid control devices placed in serial, wherein the respective supporting members are provided with raised portions at their opposite end portions, the main bodies of the plurality of fluid control devices are placed between the raised portions of the respective supporting members such that the openings of the flow paths therein are butted against one another, a main-body securing male-threaded member penetrated through the raised portion of the inlet supporting member at the end portion at the opposite side thereof from the adjustment device in the longitudinal direction is screwed thereinto so that the main bodies of the plurality of fluid control devices near the inlet of the adjustment device are mounted to the inlet supporting member, and a main-body securing male-threaded member penetrated through the raised portion of the outlet supporting member at the end portion at the opposite side thereof from the adjustment device in the longitudinal direction is screwed thereinto so that the main bodies of the plurality of fluid control devices near the outlet of the adjustment device are mounted to the outlet supporting member.

A single line in the fluid control apparatus is constituted by, for example, a mass-flow controller as an adjustment device and shutoff/open devices provided near the inlet and the outlet of the mass-flow controller for allowing and intercepting the flow thereinto and therefrom, wherein the portions of the shutoff/open devices, out of them, are formed to be the fluid control apparatus according to the first aspect of the invention. The shutoff/open devices are provided with at least a single shutoff valve and also provided with fluid control devices such as a filter, a regulator and flow-path blocks, as required. For example, an inlet pipe-joint connection flow-path block placed at the inlet can be regarded as a single fluid control device and, also, a fluid introducing member constituted by this flow-path block and one or two inlet joints integrated with the flow-path block can be regarded as a single flow control device.

The heights of raised portions can be made either equal to the height of the main bodies or smaller than the height of the main bodies.

In the fluid control apparatuses according to the first and second aspect of the inventions, for example, a single L-shaped flow path or a pair of L-shaped flow paths are formed through the main bodies of the fluid control devices, and the openings of the flow paths in the main bodies of each adjacent pair of fluid control devices are butted against each other with a sealing portion interposed therebetween. The shutoff valve is constituted by a main body having a pair of L-shaped flow paths formed therethrough such that the openings of the flow paths in the longitudinal direction (a direction of the line) are oriented in the direction opposite from each other, and an actuator mounted to the main body for intercepting and establishing the communication between these flow paths. The mass-flow controller, which is an exemplary adjustment device, is constituted by a mass-flow-controller main body and secondary flow-path blocks provided to be protruded from the inlet and the outlet of the mass-flow-controller main body, wherein the secondary flow-path blocks of the mass-flow controller are supported by the mass-flow-controller connection flow-path blocks having an L-shaped flow path formed therethrough. In this case, the mass-flow-controller connection flow-path blocks are formed to be fluid control devices constituted by only block-shaped main bodies having a flow path formed therethrough.

The fluid control apparatus according to the second aspect of the invention, wherein the adjustment device includes an adjustment-device main body and secondary flow-path blocks provided to be protruded from the inlet and the outlet of the adjustment-device main body, the fluid control devices closest to the adjustment device, out of the plurality of fluid control devices near the inlet and the outlet of the adjustment device, are formed to be adjustment-device connection flow-path blocks, and the respective secondary flow-path blocks of the adjustment device are preferably supported by the adjustment-device connection flow-path blocks and mounted thereto through adjustment-device securing male-threaded members thereabove. With this structure, it is possible to attach and detach only the adjustment device, while maintaining the plurality of control devices supported by the supporting members.

The inlet shutoff/open device includes a plurality of shutoff valves (a process-gas shutoff valve and a purge-gas shutoff valve), as a plurality of fluid control devices for ejecting two types of fluids (a purge gas and a process gas) downwardly in such a way as to changeover between the two types of fluids in order, for example. In the case where the inlet shutoff/open device includes a process-gas shutoff valve and a purge-gas shutoff valve, it is preferable that the inlet shutoff/open device includes a two-fluid introducing member constituted by a process-gas introducing pipe joint, a purge-gas introducing pipe joint and a flow-path block. Further, in the main body of the purge-gas shutoff valve, there are formed two inlet L-shaped flow paths which are larger and smaller L-shaped flow paths which are opened at their one ends to the inlet and opened at the other ends toward the actuator (the smaller flow path (= an upper-stage flow path) is for process gas, while the larger flow path (=a lower-stage flow path) is for purge gas) and, also, there is formed an outlet L-shaped flow path (for purge gas) which is opened at its one end toward the actuator and is communicated at the other end to the adjustment device. In association therewith, in the flow-path block in the two-fluid introducing member, there are formed two L-shaped flow paths which are larger and smaller L-shaped flow paths (the smaller L-shaped flow path is for the process gas, while the larger L-shaped flow path is for the purge gas). Further, in the valve main body of the process-gas 2-port shut off valve, there is formed a lower-stage through flow path (for the purge gas), in addition to a pair of L-shaped flow paths (for the process gas) which are adapted such that their one openings are oriented in an upward direction while the other openings are oriented in directions opposite from each other in the direction of the line.

A pressing block provided with no flow path may be interposed between the raised portion through which the main-body securing male-threaded member is screwed and the fluid control device closest to the raised portion.

The adjustment-device connection flow-path blocks can be adapted such that they can be disengaged from the supporting members, by disengaging the main-body securing male-threaded members, similarly to the main bodies of the other fluid control devices, as a matter of cause. However, the adjustment-device connection flow-path blocks can be preliminarily secured to the raised portions of the supporting members through flow-path-block securing male-threaded members. Also, the raised portions can be formed to have an integral shape constituted by a portion which enables adjustment-device securing male-threaded members to be screwed thereinto and an adjustment-device connection flow-path block.

Further, the fluid control apparatus according to the first and second aspect of the invention, wherein the supporting member is slidably mounted to a rail, and supporting-member securing male-threaded members penetrated through the raised portion which is not provided with the main-body securing male-threaded member in a direction of the raise are screwed thereinto, so that the supporting member is preferably mounted to the rail. With this structure, it is possible to move the supporting members and, therefore, the plurality of fluid control devices supported by the supporting members to predetermined positions along the rail by loosening the supporting-member securing male-threaded members, which enables easily positioning the plurality of fluid control devices.

Positioning convex portions are preferably formed on a butting surface of one of the main bodies of each adjacent pair of fluid control devices, while concave portions to be fitted with the convex portions are preferably formed on the butting surface of the other main body. A total of two convex portions and a total of two concave portions are provided at positions symmetrical with respect to the openings of the flow paths. By fitting the convex portions and the concave portions with each other, it is possible to prevent the displacement of the main bodies of the fluid control devices with respect to one another in a direction orthogonal to the line, thereby causing the openings of the flow paths in each adjacent pair of main bodies to be butted against each other, without causing the displacement of the openings. Accordingly, when the main-body securing male-threaded members are screwed, the main bodies of the plurality of fluid control devices placed in serial are brought into intimate contact with one another at predetermined positions with sealing portions interposed thereamong. Further, by setting the screwing force applied to the main-body securing male-threaded members to a predetermined value, it is possible to assemble the required fluid control devices onto a single supporting member at a state where an appropriate pressure is applied to each sealing portion.

In the case where the flow paths in the main bodies of each adjacent pair of fluid control devices are connected to each other with a sealing portion interposed therebetween, it is preferable that the main-body securing male-threaded members are placed concentrically with the sealing portions.

A disengagement prevention plate for preventing the disengagement of the fluid control devices in a widthwise direction may be mounted to at least one of side surfaces of the plate-shaped portion of the supporting member. The fluid control apparatus is not always installed on a horizontal table, and may be installed on a vertical wall surface. In this case, the direction of the lines may be either horizontal or vertical. Since the disengagement prevention plate is provided, even when the fluid control apparatus is installed on a vertical wall surface such that the direction of the lines is horizontal, the fluid control devices are prevented from being disengaged therefrom in a widthwise direction, thereby preventing the degradation of the workability of installation of the fluid control apparatus. The disengagement prevention plate can be detachably mounted to the supporting member through male-threaded members at an outer side thereof in the widthwise direction, by providing at least a single female-threaded portion in a side surface of the plate-shaped portion of the supporting member.

Flow paths are provided in two stages which are upper and lower stages, at least at a single position, in the main bodies of each adjacent pair of fluid control devices, the flow paths are connected to each other with a sealing portion interposed therebetween, and the main-body securing male-threaded member may be placed such that it pushes just the center portions of the sealing portions in the two stages which are the upper and lower stages. The flow paths formed through the main bodies can be formed to have various types of shapes and can be provided in two stages which are upper and lower stages, as required. In this case, the main-body securing male-threaded members are placed such that they push just the center portions of the sealing portions in the two stages which are the upper and lower stages, which prevents uneven screwing.

In the case where the flow paths in the two stages which are the upper and lower stages and the flow path in the only one stage are mixedly present, that is, in addition to the two stages which are the upper and lower stages, only the flow path in the upper stage is provided through at least one of each adjacent pair of fluid control devices while no flow path in the lower stage is provided therein, the flow paths in the upper stage in each adjacent pair of fluid control devices are connected to each another with a sealing portion interposed therebetween, and there is preferably provided a dummy sealing portion having the same shape as that of the sealing portion in the upper stage in order to strike a balance therebetween, at the positions on butting surfaces of both the fluid control devices which are coincident with the sealing portion in the lower stage.

The fluid control apparatus can be suitably used in a semiconductor fabrication device and, in this case, two types of different gasses (a process gas and a purge gas) are used. In order to maintain a purity of the process gas, there is a need for reducing the dead volume in flowing the process gas therethrough. In order to correspond to the need, the inlet shutoff/open device includes a purge-gas shutoff valve including a main body having a valve chamber opened at its upper surface and an actuator for bringing a valve member into contact with a valve seat within the valve chamber and separating the valve member from the valve seat, the purge-gas shutoff valve being adjacent to the adjustment-device flow-path block, and, in the main body of the purge-gas shutoff valve, there may be provided a through flow path which is penetrated through the main body in the direction from the inlet to the outlet, is constantly communicated with the flow path in the adjustment-device connection flow-path block and is used as a process-gas introducing flow path and as a process-gas/purge-gas ejecting flow path, a purge-gas introducing flow path which is opened at its one end to a portion spaced apart from the valve chamber above the main body and is communicated at its other end to the valve chamber, and a purge-gas ejecting flow path which is branched from the through flow path, is communicated with the valve chamber and is adapted such that the communication between the purge-gas ejecting flow path and the purge-gas introducing flow path is established and intercepted by the actuator. The inlet sliutoff/open device includes a purge-gas shutoff valve including a main body having a valve chamber opened at its upper surface and an actuator for bringing a valve member into contact with a valve seat within the valve chamber and separating the valve member from the valve seat, the purge-gas shutoff valve being adjacent to the adjustment-device flow-path block, and, in the main body of the purge-gas shutoff valve, there are provided a process-gas introducing upper-stage flow path which is opened at its one end to the inlet and is communicated at the other end to the valve chamber, a purge-gas introducing lower-stage flow path which is opened at its one end to the inlet below the process-gas introducing flow path and is communicated at the other end to the valve chamber, and a process-gas/purge-gas ejecting flow path which is communicated at its one end to the valve chamber and is opened at the other end to the outlet, the process-gas introducing upper-stage flow path and the ejecting flow path are constantly communicate with each other, while the communication between the purge-gas introducing lower-stage flow path and the ejecting flow path may be established and intercepted by the actuator. With the former structure, the dead volume is substantially zero, but the portion of the purge-gas ejecting flow path forms a dead volume, in a precise sense. With the latter structure, it is possible to null the dead volume completely since there are provided the flow paths in the two stages which are the upper and lower stages, on the contrary to the former structure which employs flow paths in a single stage and induces a slight dead volume.

### EFFECTS OF THE INVENTION

According to the fluid control apparatuses according to the first and second aspect of the inventions, the raised portions are provided at opposite end portions of the supporting member, the main bodies of the plurality of fluid control devices are placed between the raised portions of the supporting member such that the openings of the flow paths in these main bodies are butted against one another, and the main-body securing male-threaded member penetrated through the raised portions in a longitudinal direction is screwed into one of the raised portions to mount the main bodies of the plurality of fluid control devices to the supporting member, which can reduce the number of components thereby reducing the cost and, also, can reduce the number of male-threaded members used in the fluid control apparatus thereby improving the efficiency of the assembling operations, in comparison with conventional fluid control apparatuses which have required many joint members for connecting fluid control devices in an upper-stage layer.

### BRIEF DESCRIPTION OF THE DRAWINGS

Fig. 1 is a perspective view illustrating a first embodiment of a fluid control apparatus according to the present invention.
Fig. 2 is an exploded perspective view of the same.
Fig. 3 is an exploded perspective view illustrating a second embodiment of the fluid control apparatus according to the present invention.
Fig. 4 is a plan view of the same.
Fig. 5 is a vertical cross-sectional view illustrating portions of flow paths in the first and second embodiments of the fluid control apparatus according to the present invention.
Fig. 6 is a vertical cross-sectional view illustrating portions of flow paths in the third embodiment of the fluid control apparatus according to the present invention.

### EXPLANATION OF REFERENCE SYMBOLS

(2): rail
(3): mass-flow controller (adjustment device)
(3a): mass-flow-controller main body
(3b)(3c): secondary flow-path blocks
(4): inlet ahutoff/open device
(5): outlet shutoff/open device
(11) (12) (13) (15) (23) (24) (25): fluid control devices
(11) (12a) (13a) (14a) (15) (23) (24a) (25): block-shaped main bodes
(11a)(12c)(13c)(14c)(15a)(23a)(25a): flow paths
(14): purge-gas shutoff valve
(14a): main body
(14b): actuator
(14c): through flow path
(14d): purge-gas ejecting flow path
(14e): purge-gas introducing flow path
(15) (25) : adjustment-device connection flow-path blocks
(16): inlet supporting member
(18)(19): raised portions
(20): supporting-member securing male-threaded members
(21): main-body securing male-threaded members
(22)(30): pressing blocks
(26): outlet supporting member
(28) (29) : raised portions
(31): sealing portions
(32): mass-flow-controller securing male-threaded members
(35): positioning convex portions
(41)(42): disengagement prevention plates
(51) (52) (53) (54) (55) (56) (57) (58): fluid control devices
(51a) (52a) (53a) (54a) (55) (56) (56a) (57) : block-shaped main bodes
(51b) (52c) (52d) (53c) (53d) (54c) (54e) (55a): upper-stage flow paths
(51c)(52e)(53e)(54d): lower-stage flow paths
(54): purge-gas shutoff valve
(54a): main body
(54b): actuator
(54c): smaller inlet L-shaped flow path (process-gas introducing upper-stage flow path)
(54d): larger inlet L-shaped flow path (purge-gas introducing upper-stage flow path)
(54e): outlet L-shaped flow path (process-gas/purge-gas ejecting flow path)
(56a)(57c)(57d)(58a): flow paths
(59): dummy sealing portions

### BEST MODE FOR CARRYING OUT THE INVENTION

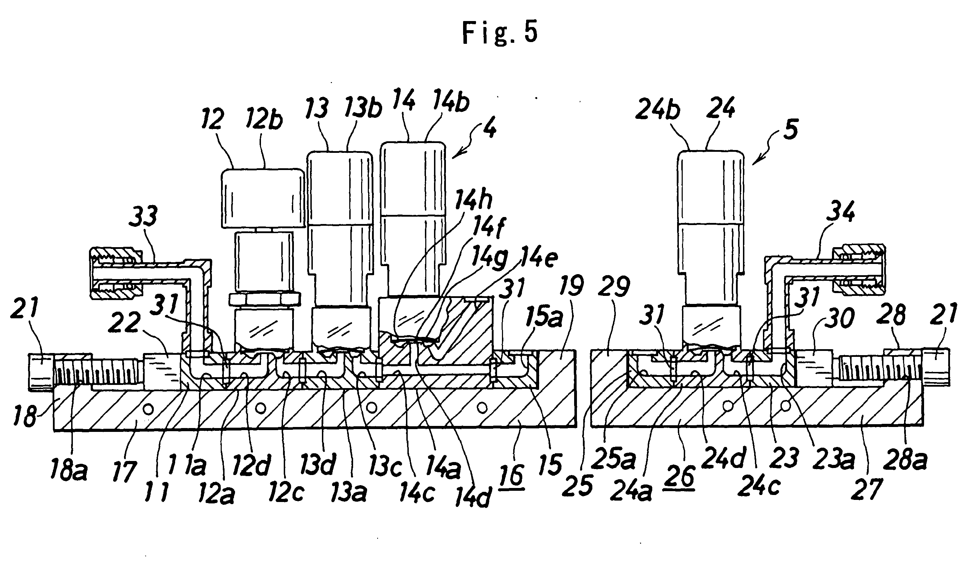

Hereinafter, embodiments of the present invention will be described, with reference to the drawings. In the following description, the terms "upper" and "lower" refer to "upper" and "lower" regarding Fig. 5.

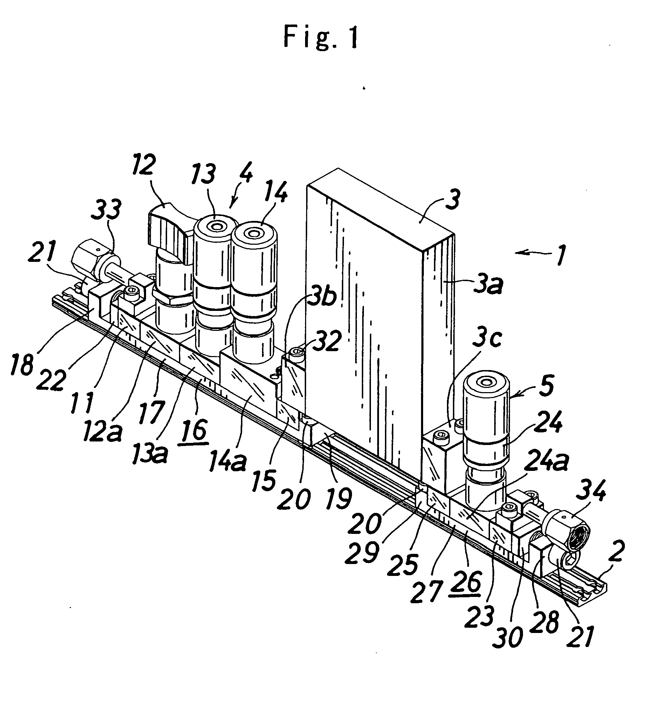

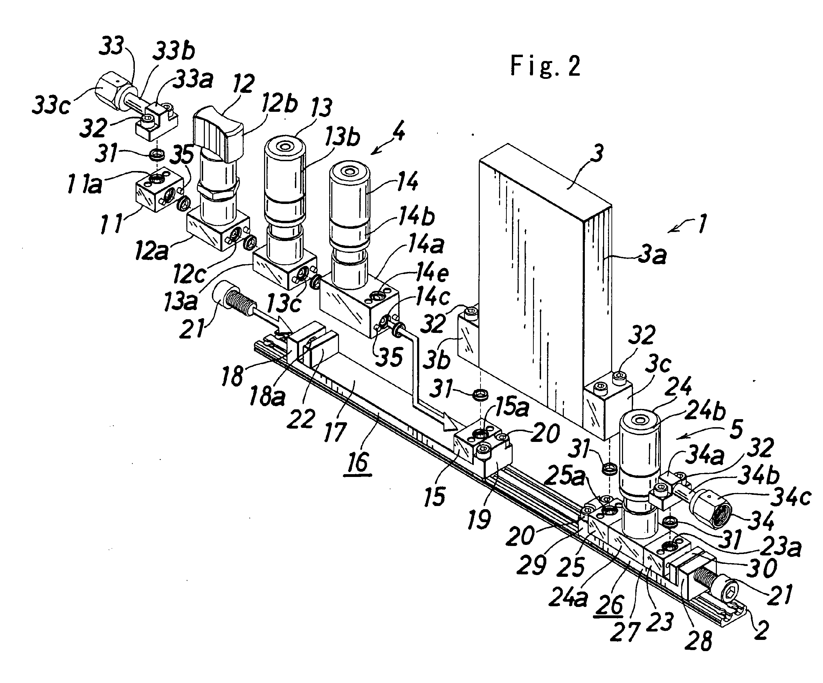

As illustrated in Fig. 1 and Fig. 2, a fluid control apparatus according to the present invention is formed by placing a plurality of lines (1) in parallel with a base material (not illustrated), such that the inlets and outlets of the plurality of lines are oriented in the same directions, wherein each line (1) is constituted by a rail (2) detachably mounted to the base material, a mass-flow controller (3) as an adjustment device, an inlet shutoff/open device (4) which is provided near an inlet of the mass-flow controller (3) for allowing and intercepting flow of fluid into the mass-flow controller (3), and an outlet shutoff/open device (5) which is provided near an outlet of the mass-flow controller (3) for allowing and intercepting flow of fluid from the mass-flow controller (3).

The inlet shutoff/open device (4) supplies two types of fluids (a purge gas and a process gas) to the mass-flow controller (3) in such a way as to switch between the two types of fluids in order and includes a plurality of fluid control devices (11)(12)(13)(14)(15) and an inlet supporting member (16) for supporting these fluid control devices (11)(12)(13)(14)(15) placed in serial in a longitudinal direction of the rail (2).

The plurality of fluid control.devices (11) (12) (13) (14) (15) in the inlet shutoff/open device (4) are an inlet pipe-joint connection flow-path block (11), a manual valve (12), a process-gas shut-off valve (13), a purge-gas shut-off valve (14) and a mass-flow-controller connection flow-path block (15), which are placed in serial in the mentioned order from an inlet of the line.

As illustrated in Fig. 2, the inlet pipe-joint connection flow-path block (11) is constituted by a rectangular parallelepiped block-shaped main body (11) having a flow path (11a) formed therethrough. The manual valve (12) includes a rectangular parallelepiped block-shaped main body (12a) having a flow path (12c) formed therethrough and a manual operation handle (12b). The process-gas shut-off valve (13) is a 2-port diaphragm valve which is constituted by a rectangular parallelepiped block-shaped main body (13a) having a flow path (13c) formed therethrough and an actuator (13b) mounted to the main body (13a). The purge-gas shut-off valve (14) is a 2-port diaphragm valve which is constituted by a rectangular parallelepiped block-shaped main body (14a) having a flow path (14c) formed therethrough and an actuator (14b) mounted to the main body (14a). The mass-flow-controller connection flow-path block (15) is constituted by a rectangular parallelepiped block-shaped main body (15) having a flow path (15a) formed therethrough.

As illustrated in detail in Fig. 5, the flow path (11a) in the inlet pipe-joint connection flow-path block (11) is formed to be an L-shaped flow path placed such that its one opening is oriented in an upward direction while the other opening is oriented toward the manual valve (12) in a direction of the line. The flow paths (12c) (12d) in the manual valve (12) are formed to be a pair of L-shaped flow paths placed such that their one openings are oriented in the upward direction while the other openings are oriented in the directions opposite from each other in the direction of the line. Similarly, the flow paths (13c)(13d) in the process-gas shut-off valve (13) are formed to be a pair of L-shaped flow paths placed such that their one openings are oriented in the upward direction while the other openings are oriented in the directions opposite from each other in the direction of the line. The purge-gas shut-off valve (14) is constituted by a main body (14a) having a valve chamber (14f) opened at its upper surface and an actuator (14b) provided on the upper surface of the main body (14a) for bringing a valve member (diaphragm) (14h) into contact with a valve seat (14g) within the valve chamber (14f) and for separating the valve member (diaphragm) (14h) from the valve seat (14g), wherein the main body (14a) is provided with a through flow path (14c) which is penetrated through the main body (14a) in a direction from the inlet to the outlet, is continuously communicated with the flow path (15a) in the mass-flow-controller connection flow-path block (15) and is used as a process-gas introducing flow path and a process-gas ejecting and purge-gas ejecting flow path, a purge-gas introducing flow path (14e) which is opened at its one end to a portion spaced apart from the valve chamber (14f) above the main body (14a) and is communicated at its other end with the valve chamber (14f), and a purge-gas ejecting flow path (14d) which is branched from the through flow path (14c) and is communicated with the valve chamber (14f), wherein the communication between the purge-gas ejecting flow path (14d) and the purge-gas introducing flow path (14e) is intercepted and allowed by the actuator (14b). The flow path (15a) in the mass-flow-controller connection flow-path block (15) is formed to be an L-shaped flow path placed such that its one opening is oriented in the upward direction while the other opening is oriented toward the purge-gas shut-off valve (14) in the direction of the line.

The inlet supporting member (16) is constituted by a plate-shaped portion (17) extending in a longitudinal direction of the rail (2) (the direction of line) and raised portions (18)(19) formed integrally with the opposite ends of the plate-shaped portion (17). Further, the inlet supporting member (16) has the same width as that of the rail (2) and is detachably mounted to the rail (2) through supporting-member securing male-threaded members (20), at the raised portion (19) at an end portion near the mass-flow controller.

The plurality of fluid control devices (11) (12) (13) (14) (15) near the inlet are placed on the plate-shaped portion (17) between the raised portions (18) (19) of the inlet supporting member (16), such that the openings of the flow paths (11a) (12d) (12c) (13d) (13c) (14c) (15a) in their main bodies (11)(12a)(13a)(14a)(15) are butted against one another. The raised portion (18) at the end portion at the opposite side from the mass-flow controller is provided with a threaded hole (18a) penetrated through the raised portion (18) in the longitudinal direction, and a main-body securing male-threaded member (21) is screwed into the threaded hole (18a). Further, a pressing block (22) is placed between the raised portion (18) at the end portion at the opposite side from the mass-flow controller and the inlet pipe-joint connection flow-path block (11). Accordingly, by screwing the main-body securing male-threaded member (21) thereinto, the pressing block (22) is moved toward the mass-flow controller, which causes the mass-flow-controller connection flow-path block (15) to be pressed against the raised portion (19) at the end portion near the mass-flow controller, at the state where the main bodies (11) (12a) (13a) (14a) (15) in the plurality of fluid control devices (11) (12) (13) (14) (15) are in intimate contact with one another, thereby causing the main bodies (11)(12a)(13a)(14a)(15) in the plurality of fluid control devices (11) (12) (13) (14) (15) to be secured to the supporting member (16). The flow paths (11a) (12d) (12c) (13d) (13c) (14c) (15a) are connected to one another through sealing portions (31), and the main-body securing male-threaded member (21) is placed concentrically with the sealing portions (31), namely such that the sealing portions (31) are aligned along a direction of the axis of the male threaded member (21).

The outlet shutoff/open device (5) includes a plurality of fluid control device (23) (24) (25) and an outlet supporting member (26) for supporting the plurality of fluid control devices (23)(24)(25) placed in serial in the longitudinal direction of the rail (2).

The plurality of fluid control devices (23)(24)(25) in the outlet shutoff/open device (5) are an outlet pipe-joint connection flow-path block (23), a 2-port shut-off valve (24) and a mass-flow-controller connection flow-path block (25), which are placed in serial in the mentioned order from the outlet of the line.

The outlet pipe-joint connection flow-path block (23) is constituted by a rectangular parallelepiped block-shaped main body (23) having a flow path (23a) formed therethrough. The 2-port shut-off valve (24) is constituted by a rectangular parallelepiped block-shaped main body (24a) having flow paths (24c) (24d) formed therethrough and an actuator (24b) mounted to the main body (24a). The mass-flow-controller connection flow-path block (25) is constituted by a rectangular parallelepiped block-shaped main body (25) having a flow path (25a) formed therethrough. The flow path (23a) in the outlet pipe-joint connection flow-path block (23) is formed to be an L-shaped flow path placed such that its one opening is oriented in the upward direction while the other opening is oriented toward the shut-off valve (24) in the direction of the line. The flow paths (24c) (24d) in the 2-port shut-off valve (24) are formed to be a pair of L-shaped flow paths placed such that their one openings are oriented in the upward direction while the other openings are oriented in the directions opposite from each other in the direction of the line. The flow path (25a) in the mass-flow-controller connection flow-path block (25) is formed to be an L-shaped flow path placed such that its one opening is oriented in the upward direction while the other opening is oriented toward the 2-port shut-off valve (24) in the direction of the line.

The outlet supporting member (26) is constituted by a plate-shaped portion (27) extending in the longitudinal direction of the rail 2 (the direction of line) and raised portions (28) (29) formed integrally with the opposite ends of the plate-shaped portion (27). The outlet supporting member (26) has the same width as that of the rail (2) and is detachably mounted to the rail (2) through supporting-member securing male-threaded members (20) at the raised portion (29) near the mass-flow controller (3).

The plurality of fluid control devices (23) (24) (25) near the outlet are placed on the plate-shaped portion (27) between the raised portions (28) (29) of the outlet supporting member (26), such that the flow paths (23a) (24c) (24d) (25a) in their main bodies (23) (24a) (25) are butted against one another. The raised portion (28) at the end portion at the opposite side from the mass-flow controller is provided with a threaded hole (28a) penetrated through the raised portion (28) in the longitudinal direction, and a main-body securing male-threaded member (21) is screwed into the threaded hole (28a). Further, a pressing block (30) is placed between the raised portion (28) at the end portion at the opposite side from the mass-flow controller and the outlet pipe-joint connection flow-path block (23). Accordingly, by screwing the main-body securing male-threaded member (21) thereinto, the pressing block (30) is moved toward the mass-flow controller, which causes the mass-flow-controller connection flow-path block (25) to be pressed against the raised portion (29) at the end portion near the mass-flow controller, at the state where the main bodies (23)(24a)(25) in the plurality of fluid control devices (23) (24) (25) are in intimate contact with one another, thereby causing the main bodies (23) (24a) (25) in the plurality of fluid control devices (23) (24) (25) to be secured to the supporting member (26). The flow paths (2.3a) (24c) (24d) (25a) are connected to one another through sealing portions (31), and the main-body securing male-threaded member (21) is placed concentrically with the sealing portions (31), namely such that the sealing portions (31) are aligned along the direction of the axis of the male-threaded member (21).

The mass-flow controller (3) is constituted by a mass-flow controller main body (3a) and inlet and outlet secondary flow-path blocks (3b) (3c) provided to be protruded from the inlet and the outlet of the mass-flow controller main body (3a). The secondary flow-path blocks (3b) (3c) include flow paths butted against the openings of the flow paths (15a)(25a) in the mass-flow-controller connection flow-path blocks (15)(25), respectively. The mass-flow controller (3) is overlapped at the secondary flow-path blocks (3b) (3c) on the mass-flow-controller connection flow-path blocks (15)(25) with the sealing portions (31) interposed therebetween and also is secured at the secondary flow-path blocks (3b) (3c) to the corresponding mass-flow-controller connection flow-path blocks (15) (25) through two mass-flow-controller securing male members (32) penetrated through the respective secondary flow-path blocks (3b)(3c).

An inlet pipe joint (33) is mounted to the inlet pipe-joint connection flow-path block (11). Further, an outlet pipe joint (34) is mounted to the outlet pipe-joint connection flow-path block (23).

As illustrated in Fig. 2, the inlet pipe joint (33) is constituted by a block portion (33a) having an L-shaped flow path butted at its one opening against the upward opening of the flow path (11a) in the inlet pipe-joint connection flow-path block (11) with a sealing portion (31) interposed therebetween, a pipe portion (33b) extending from the other opening of the block portion (33a), and a cap nut portion (33c) to be coupled to a pipe and the like extending from a gas supply source. Further, the inlet pipe joint (33) is coupled to the inlet pipe-joint connection flow-path block (11) through two joint securing male-threaded members (32) penetrated through the block portion (33a). Similarly, the outlet pipe joint (34) is constituted by a block portion (34a) having an L-shaped flow path butted at its one opening against the upper opening of the flow path in the outlet pipe-joint connection flow-path block (23) with a sealing portion (31) interposed therebetween, a pipe portion (34b) extending from the other opening of the block portion (34a), and a cap nut portion (34c) to be coupled to a pipe and the like extending toward a semiconductor fabrication chamber. Further, the outlet pipe joint (34) is coupled to the outlet pipe-joint connection flow-path block (23) through two joint securing male-threaded members (32) penetrated through the block portion (34a).

The interval (an inside measurement) between the raised portions (18) (19) (28) (29) of each supporting members (16) (26) is made to be greater than the total length of the main bodies (11) (12a) (13a) (14a) (15) (23) (24a) (25) of the fluid control devices (11) (12) (13) (14) (15) (23) (24) (25) and the pressing blocks (22)(30). Further, the pressing blocks (22)(30) are formed to have a rectangular parallelepiped shape provided with no flow path and no concavity and convexity. This enables placing the mass-flow-controller connection flow-path block (15), the purge-gas shutoff valve (14), the process-gas shutoff valve (13), the manual valve (12), the inlet pipe-joint connection flow-path block (11) and the pressing block (22) in the mentioned order on the inlet supporting member (16), for example, at a state where the main-body securing male-threaded member (21) is disengaged therefrom. This enables easily mounting the fluid control devices (11) (12) (13) (14) (15) (23) (24) (25) onto the supporting members (16)(26) and replacing the fluid control devices (11) (12) (13) (14) (15) (23) (24) (25) as required.

As illustrated in Fig. 2, cylindrical-column-shaped positioning convex portions (35) are formed on a butting surface of one main body (11) (12a) (13a) (14a) (23) (24a), out of the main bodies (11) (12a) (13a) (14a) (23) (24a) of each adjacent pair of fluid control devices (11) (12) (13) (14) (15) (23) (24) (15), while cylindrical-column-shaped concave portions (not illustrated) to be detachably fitted with the convex portions (35) are formed on the butting surface of the other main body (12a) (13a) (14a) (15) (24a) (25). A total of two convex portions (35) and a total of two concave portions are provided at positions symmetrical with respect to the openings of the flow paths (11a)(12d)(12c)(13d)(13c)(14c)(15a)(23a)(24c)(24d)(25a). By fitting the convex portions (35) and the concave portions with each other, it is possible to prevent the displacement of each adjacent pair of main bodies (11) (12a) (13a) (14a) (15) (23) (24a) (25) from each other in a direction orthogonal to the line (the deflection thereof in the upward direction and the movement in the leftward and rightward directions), thereby causing the openings of their flow paths (11a) (12d) (12c) (13d) (13c) (14c) (15a) (23a) (24c) (24d) (25a) to be butted against each other with the sealing portions (31) interposed therebetween, without causing the displacement of the openings. Accordingly, when the main-body securing male-threaded members (21) are screwed, the main bodies (11) (12a) (13a) (14a) (15) (23) (24a) (25) of the plurality of fluid control devices (11) (12) (13) (14) (15) (23) (24) (25) placed in serial are brought into intimate contact with one another at predetermined positions with the sealing portions (31) interposed thereamong. Further, by setting the screwing force applied to the main-body securing male-threaded members (21) to a predetermined value, it is possible to assemble the required fluid control devices (11) (12) (13) (14) (15) (23) (24) (25) onto the corresponding supporting members (16)(26) at a state where an appropriate pressure is applied to each sealing portion (31).

The respective supporting members (16)(26) are made slidable along the rail (2), by loosening the supporting-member securing male-threaded members (20) thereof. Further, the respective supporting members (16) (26) are moved to specified positions through proper positioning means and, thereafter, are secured to the rail (2) at predetermined positions by screwing the supporting-member securing male-threaded members (20). After the respective supporting members (16) (26) are secured thereto, the mass-flow controller (3) is mounted to the supporting members (16) (26) such that it straddles both of them.

The inlet pipe-j oint connection flow-path block (11), the mass-flow-controller connection flow-path blocks (15) (25) and the outlet pipe-joint connection flow-path block (23) are formed to have the same height as that of the raised portions (18) (19) (28) (29) of the supporting members (16) (26) and, also, the pressing blocks (22) (30) are formed to have the same height as that of these members. Further, spot facings are provided in the raised portions (19)(29) of the supporting members (16) (26) in which the supporting-member securing male-threaded members (20) are provided, in order to prevent the head portions of the male-threaded members (20) from protruding from the raised portions (19) (29). This enables mounting the inlet pipe joint (33), the outlet pipe joint (34) and the respective secondary flow-path blocks (3b) (3c) of the mass-flow controller (3) to the corresponding flow-path blocks (11)(15)(23)(25), without causing them to interfere with the raised portions (19) (29) of the supporting members (16) (26).

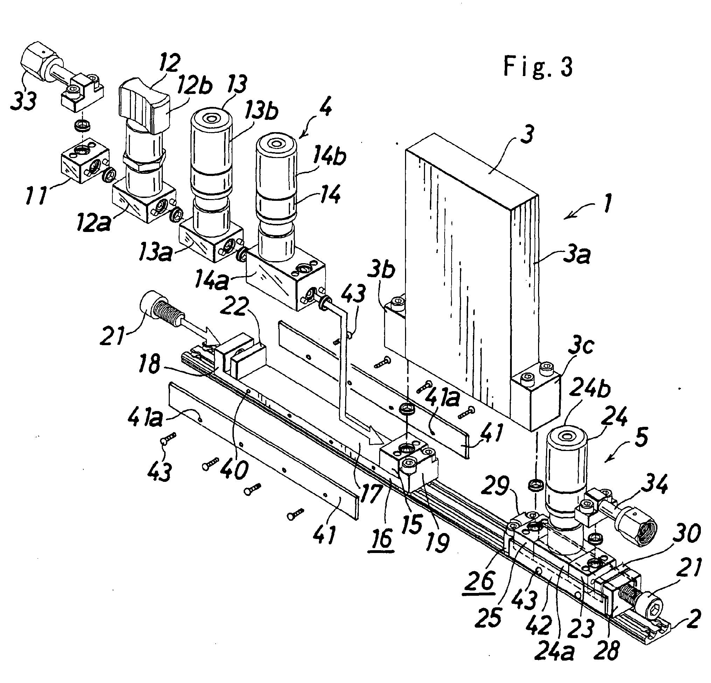

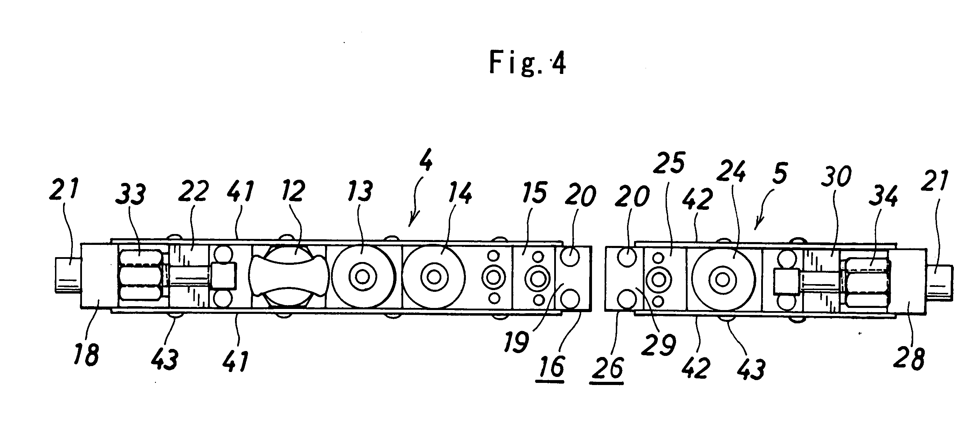

The fluid control apparatus can be installed on either a horizontal table or a vertical wall surface. In the case of installing it on a vertical wall surface, the direction of the lines can be made either horizontal or vertical. Fig. 3 and Fig. 4 illustrate a preferred embodiment (a second embodiment) where the fluid control apparatus is installed on a vertical wall surface such that the direction of the lines is horizontal.

In the present embodiment, as illustrated in Fig. 3 and Fig. 4, a plurality of female-threaded portions (40) are provided in the opposite side surfaces of the plate-shaped portions (17) (27) of the respective supporting members (16) (26). Further, disengagement prevention plates (41)(42) for preventing the disengagement of the fluid control devices (11) (12) (13) (14) (15) (23) (24) (25) in the widthwise direction are contacted with the outer sides (the opposite sides) of the supporting members (16) (26) in the widthwise direction and are secured to the supporting members (16) (26) through bolts (43) inserted into a plurality of through holes (41a) provided through the disengagement prevention plates (41) (42). After the disengagement prevention plates (41)(42) are secured thereto, the fluid control devices (11) (12) (13) (14) (15) (23) (24) (25) can be successively installed, while the fluid control devices (11) (12) (13) (14) (15) (23) (24) (25) are prevented from being disengaged therefrom in the widthwise direction through the disengagement prevention plates (41) (42) during the installing operations. This increases the workability of the installation of the fluid control devices.

The structures other than the structure for preventing the disengagement of the fluid control devices (11) (12) (13) (14) (15) (23) (24) (25) in the widthwise direction are completely the same as those of the first embodiment which has been described with reference to Figs. 1, 2 and 5 and therefore are not given herein.

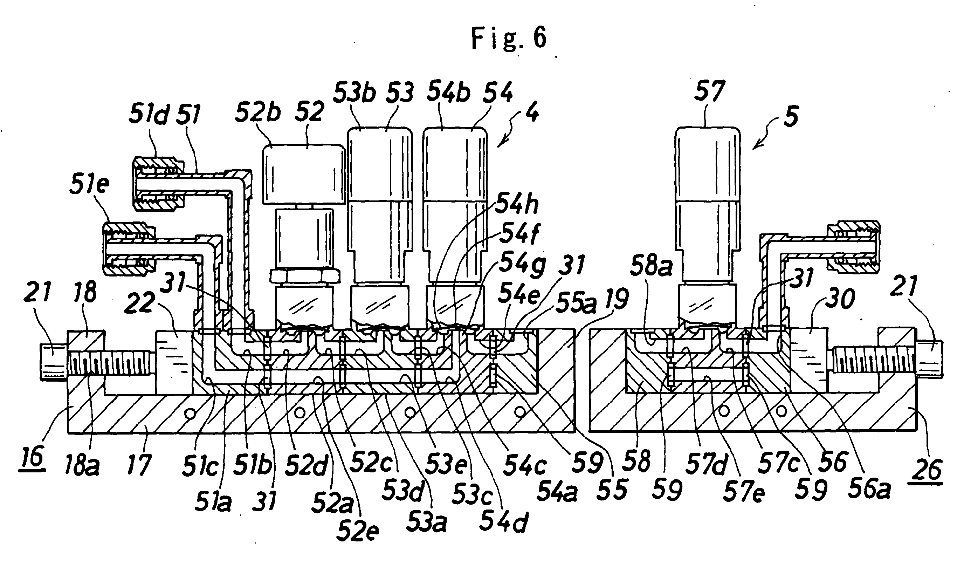

Fig. 6 illustrates a fluid control apparatus according to a third embodiment of the present invention, corresponding to Fig. 5 according to the first embodiment. The fluid control apparatus according to the third embodiment is different from the first embodiment, in that flow paths are formed in two stages which are upper and lower stages within the main body. In the following description, the same structures as those of the first embodiment will be designated by the same reference symbols and will not be given.

The inlet shutoff/open device (4) includes a plurality of fluid control devices (51)(52)(53)(54)(55) and an inlet supporting member (16) for supporting these fluid control devices (51) (52) (53) (54) (55) placed in serial in the longitudinal direction of the rail (2).

The plurality of fluid control devices (51) (52) (53) (54) (55) in the inlet shutoff/open device (4) are a two-fluid introducing member (51), a manual valve (52), a process-gas shut-off valve (53), a purge-gas shut-off valve (54) and a mass-flow-controller connection flow-path block (55), which are placed in serial in the mentioned order from the inlet of the line.

The two-fluid introducing member (51) is constituted by a rectangular parallelepiped flow-path block (51a) having two L-shaped flow paths (51b) (51c) with different sizes and two pipe joints (51d)(51e) mounted to the flow-path block (51a). The two L-shaped flow paths (51b) (51c) are adapted such that their one openings are oriented in the upward direction while the other openings are oriented toward the manual valve (52) in the direction of the line, and the process-gas introducing pipe joint (51d) is connected to the smaller L-shaped flow path (51b) (in the upper stage) while the purge-gas introducing pipe joint (51e) is connected to the larger L-shaped flow path (51c) (in the lower stage). The pipe joints (51d) (51e) have the same structure as the inlet pipe joint (33) in the first embodiment.

The manual valve (52) includes a rectangular parallelepiped block-shaped main body (52a) and a manual operation handle (52b). In the main body (52a) of the manual valve (52), there is formed a through flow path (52e) in the lower stage, in addition to a pair of L-shaped flow paths (52c) (52d) placed such that their one openings are oriented in the upward direction while the other openings are oriented in the directions opposite from each other in the direction of the line.

The process-gas shut-off valve (53) is a 2-port diaphragm valve which is constituted by a rectangular parallelepiped block-shaped main body (53a) having a valve chamber opened at its upper surface and an actuator (53b) provided at the upper surface of the main body (53a) for bringing a valve member (diaphragm) into contact with a valve seat within the valve chamber and for separating the valve member (diaphragm) from the valve seat. In the main body (53a) of the process-gas shut-off valve (53), there is formed a through flow path (53e) in the lower stage, in addition to a pair of L-shaped flow paths (53c) (53d) placed such that their one openings are oriented in the upward direction while the other openings are oriented in the directions opposite from each other in the direction of the line.

The purge-gas shut-off valve (54) is a 3-port diaphragm valve which is constituted by a rectangular parallelepiped block-shaped main body (54a) having a valve chamber (54f) opened at its upper surface and an actuator (54b) provided at the upper surface of the main body (54a) for bringing a valve member (diaphragm) (54h) into contact with a valve seat (54g) within the valve chamber (54f) and for separating the valve member (diaphragm) (54h) from the valve seat (54g). In the main body (54a) of the shut-off valve (54), there are formed a smaller inlet L-shaped flow path (process-gas introducing flow path in the upper stage) (54c) which is opened at its one end to the inlet and is communicated at the other end with the valve chamber (54f), a larger inlet L-shaped flow path (purge-gas introducing flow path in the lower stage) (54d) which is opened at its one end to the inlet below the inlet L-shaped flow path (54c) and is communicated at the other end with the valve chamber (54f), and an outlet L-shaped flow path (process-gas/purge-gas ejecting flow path) (54e) which is communicated at its one end with the valve chamber (54f) and is opened at the other end to the outlet. The smaller inlet L-shaped flow path (in the upper stage) (54c) and the outlet L-shaped flow path (54e) are constantly communicated with each other, while the actuator (54b) establishes or intercepts the communication between the larger inlet L-shaped flow path (in the lower stage) (51d) and the outlet L-shaped flow path (54e).

The mass-flow controller connection flow-path block (55) is constituted by a rectangular parallelepiped block-shaped main body (55) having a flow path (55a) formed therethrough. The flow path.(55a) in the mass-flow-controller connection flow-path block (55) is formed to be an L-shaped flow path placed such that its one opening is oriented in the upward direction while the other opening is oriented toward the purge-gas shut-off valve (54).

The plurality of fluid control devices (51)(52)(53)(54)(55) near the inlet are placed on the plate-shaped portion (17) between the raised portions (18) (19) of the inlet supporting member (16), such that the openings of the flow paths (51b) (51c) (52c) (52d) (52e) (53c) (53d) (53e) (54c) (54d) (54e) (55a ) in their main bodies (51a)(52a)(53a)(54a)(55) are butted against one another.

The raised portion (18) of the inlet supporting member (16) at the end portion at the opposite side from the mass-flow controller is provided with a threaded hole (18a) penetrated through the raised portion (18) in the longitudinal direction, and a main-body securing male-threaded member (21) is screwed into the threaded hole (18a) at an outer side thereof in the longitudinal direction. Further, a pressing block (22) is placed between the raised portion (18) at the end portion at the opposite side from the mass-flow controller and the main body (51a) of the two-fluid introducing member (51). Accordingly, by screwing the main-body securing male-threaded member (21) thereinto, the pressing block (22) is moved toward the mass-flow controller, which causes the mass-flow-controller connection flow-path block (55) to be pressed against the raised portion (19) at the end portion near the mass-flow controller, at the state where the main bodies (51a)(52a)(53a)(54a)(55) in the plurality of fluid control devices (51) (52) (53) (54) (55) are in intimate contact with one another, thereby causing the main bodies (51a)(52a)(53a)(54a)(55) in the plurality of fluid control devices (51) (52) (53) (54) (55) to be secured to the supporting member (16).

Comparing the inlet shutoff/open device (4) according to the third embodiment with those according to the first and second embodiments, the purge-gas introducing shut-off valve (54) according to the third embodiment is a 3-port diaphragm valve and adapted to introduce the purge gas introduced from the pipe joint (51e) provided at the inlet of the inlet shutoff/open device (4) into the flow path (54d) within the main body (54a) through the lower-stage flow paths (51c) (52e) (53e) provided in the other fluid control devices (51) (52) (53), while the purge-gas introducing shut-off valve (14) according to the first embodiment is a 2-port diaphragm valve and is adapted to introduce the purge gas directly into its main body (14a) through the purge-gas introducing flow path (14e).

Consequently, in the third embodiment, at least at a single position (a total of three positions which are the butting surfaces of the two-fluid introducing member (51), the manual valve (52), the process-gas shut-off valve (53) and the purge-gas shut-off valve (54) , in the present embodiment) , the upper-stage flow paths (51b) (52d) (52c) (53d) (53c) (54c) and the lower-stage flow paths (51c) (52e) (53e) (54d) are provided in the main bodies (51a) (52a) (53a) (54a) of the fluid control devices (51) (52) (53) (54) which are adjacent to one another, and the flow paths (51b) (51c) (52c) (52d) (52e) (53c) (53d) (53e) (54c) (54d) are connected to one another through the sealing portions (31) interposed thereamong. Further, at least at a single position (a total of a single position which is the butting surfaces of the purge-gas shut-off valve (54) and the mass-flow-controller connection flow-path block (55), in the present embodiment), only the upper-stage flow path (55a) is provided in at least one of the main bodies (54a)(55a) of adjacent pair of fluid control devices (54) (55) (the mass-flow-controller connection flow-path block (55), in the present embodiment), without providing a lower stage, and the upper-stage flow paths (54e) (55a) in the main bodies (54a) (55a) of the adjacent fluid control devices (54) (55) are connected to each other with the sealing portions (31) interposed therebetween.

In this case, the main-body securing male-threaded members (21) are placed such that they push just the center portions of the sealing portions (31) in the two stages which are upper and lower stages. Further, between the butting surface of the mass-flow-controller connection flow-path block (55) provided with the upper-stage flow path (55a) and no lower-stage flow path and the butting surface of the purge-gas shutoff valve (54) adjacent thereto, there is provided a dummy sealing portion (59) having the same shape as that of the sealing portions (31) in the upper stage in order to strike a balance between the dummy sealing portion (59) and the sealing portions (31), at the position coincident with the sealing portions in the lower stage.

The outlet shutoff/open device (5) includes a plurality of fluid control device (56) (57) (58) and an outlet supporting member (26) for supporting the plurality of fluid control devices (56)(57)(58) placed in serial in the longitudinal direction of the rail (2).

The plurality of fluid control devices (56) (57) (58) in the outlet shutoff/open device (5) are an outlet pipe-joint connection flow-path block (56), a 2-port shut-off valve (57) and a mass-flow-controller connection flow-path block (58), which are placed in serial in the mentioned order from the outlet of the line.

The outlet pipe-joint connection flow-path block (56) is constituted by a rectangular parallelepiped block-shaped main body (56) having a flow path (56a) formed therethrough. The 2-port shut-off valve (57) is constituted by a rectangular parallelepiped block-shaped main body (57a) having flow paths (57c) (57d) formed therethrough and an actuator (57b) mounted to the main body (57a). The mass-flow-controller connection flow-path block (58) is constituted by a rectangular parallelepiped block-shaped main body (58) having a flow path (58a) formed therethrough. The flow path (56a) in the outlet pipe-joint connection flow-path block (56) is formed to be an L-shaped flow path placed such that its one opening is oriented in the upward direction while the other opening is oriented toward the shut-off valve (57) in the direction of the line. The flow paths (57c) (57d) in the 2-port shut-off valve (57) are formed to be a pair of L-shaped flow paths placed such that their one openings are oriented in the upward direction while the other openings are oriented in the directions opposite from each other in the direction of the line. The flow path (58a) in the mass-flow-controller connection flow-path block (58) is formed to be an L-shaped flow path placed such that its one opening is oriented in the upward direction while the other opening is oriented toward the 2-port shut-off valve (57) in the direction of the line.

Comparing the outlet shutoff/open device (5) according to the third embodiment with those according to the first and second embodiments illustrated in Fig. 5, the flow paths (56a)(57c)(57d)(58a) in the outlet shutoff/open device (5) according to the third embodiment through which gas is actually flowed are completely the same as the flow paths (23a) (24c) (24d) (25a) in the first and second embodiments through which gas is actually flowed. Namely, all the fluid control devices (56)(57)(58) constituting the outlet shutoff/open device (5) according to the third embodiment are provided with only the upper-stage flow paths (56a)(57c)(57d)(58a) and provided with no lower-stage flow paths, and the upper-stage flow paths (56a) (57c) (57d) (58a) in the main bodies (56) (57a) (58) of each adjacent pair of fluid control devices (56) (57) (58) are connected to each other with the sealing portions (31) interposed therebetween. In this case, the main-body securing male-threaded members (21) are placed such that they push just the center portions of the sealing portions (31) in the upper and lower stages in the inlet shutoff/open device (4). Further, the main body (57a) of the 2-port shutoff valve (57) is formed to have the same shape as that of the main body (52a) of the process-gas 2-port shutoff valve (53) in the inlet shutoff /open device (4), thereby forming a dummy flow path (57e) in the lower stage in the main body (57a) of the 2-port shutoff valve (57). Further, between the butting surface of the main body (57a) of the 2-port shutoff valve (57) and the butting surface of the outlet pipe-joint connection flow-path block (56) and between the butting surface of the main body (57a) of the 2-port shutoff valve (57) and the butting surface of the mass-flow-controller connection flow-path block (58), there are provided dummy sealing portions (59) having the same shape as the sealing portions (31) in the upper stage in order to strike a balance between the dummy sealing portions (59) and the sealing portions (31), at the positions coincident with the sealing portions in the lower stage.

With the flow paths (11a) (12d) (12c) (13d) (13c) (14c) (15a) (23a) (24c) (24d) (25a) provided in the inlet shutoff/open device (4) according to the first and second embodiments illustrated in Fig. 5, the purge gas is introduced from above the purge-gas shutoff valve (14), by opening the purge-gas shutoff valve (14) while closing the process-gas shutoff valve (13). The purge gas introduced into the purge-gas introducing flow path (14e) in the main body (14a) of the purge-gas shutoff valve (14) is flowed into the purge-gas ejecting flow path (14d) within the main body (14a) since the actuator (14b) of the purge-gas shutoff valve (14) is opened and, further, is supplied to the mass-flow controller (3) through the flow path (15a) in the mass-flow-controller connection flow-path block (15) since the actuator (13b) of the process-gas shutoff valve (13) is closed.

In cases where a process gas is flowed thereafter, the process gas is introduced through the inlet pipe joint (33), by opening the manual valve (12) and the process-gas shutoff valve (13) while closing the purge-gas shutoff valve (14). The process gas is supplied to the mass-flow controller (3) through the flow path (11a) in the inlet pipe-joint connection flow-path block (11), the flow paths (13d) (13c) in the process-gas shutoff valve (13) and the through flow path (14c) extended and penetrated through the main body (14a) of the purge-gas shutoff valve (14) in the direction from the inlet to the outlet. At this time, the purge-gas ejecting flow path (14d) in the main body (14a) of the purge-gas shutoff valve (14) forms a dead volume, but the size thereof is significantly small (the dead volume is substantially zero), thereby maintaining a purity of the process gas.

With the flow paths (51b) (51c) (52c) (52d) (52e) (53c) (53d) (53e) (54c) (54d) provided in the inlet shutoff/open device (4) according to the third embodiment illustrated in Fig. 6, the purge gas is introduced through the purge-gas introducing pipe joint (51e) in the two-fluid introducing member (51), by opening the purge-gas shutoff valve (54) while closing the process-gas shutoff valve (53). The purge gas is flowed into the larger inlet L-shaped flow path (54d) which is a lower-stage flow path in the purge-gas shutoff valve (54) through the respective lower-stage flow paths (51c) (52e) (53e) in the two-fluid introducing member (51), the manual valve (52) and the process-gas shutoff valve (53), then is flowed into the outlet L-shaped flow path (54e) in the main body (54a) since the actuator (53b) of the process-gas shutoff valve (53) is closed while the actuator (54b) of the purge-gas shutoff valve (54) is opened, and then is supplied to the mass-flow controller (3) through the flow path (55a) in the mass-flow-controller connection flow-path block (55).

In cases where a process gas is flowed thereafter, the process gas is introduced through the process-gas introducing pipe joint (51d) in the two-fluid introducing member (51), by opening the manual valve (52) and the process-gas shutoff valve (53) while closing the purge-gas shutoff valve (54). The process gas is flowed into the smaller L-shaped flow path (54c) which is an upper-stage flow path in the purge-gas shutoff valve (54) through the upper-stage flow paths (51b) (52d) (52c) (53d) (53c) in the two-fluid introducing member (51), the manual valve (52) and the process-gas shutoff valve (53), then is flowed into the outlet L-shaped flow path (54e) in the main body (54a) since the smaller inlet L-shaped flow path (54c) and the outlet L-shaped flow path (54e) are constantly communicated with each other, and then is supplied to the mass-flow controller (3) through the flow path (55a) in the mass-flow-controller connection flow-path block (55).

As described above, according to the third embodiment, there is provided the structure having the flow paths in the upper and lower stages, which enables completely nulling the dead volume, while, in the inlet shutoff/open devices (4) according to the first and second embodiments, the third flow path (14d) in the main body (14a) of the purge-gas shutoff valve (14) forms a dead volume, in a precise sense.

With the fluid control apparatuses according to the first to third embodiments, it is possible to reduce the number of components, thereby reducing the cost, in comparison with conventional fluid control apparatuses which require greater numbers of joint members for connecting fluid control devices in the upper stage. Further, the fluid control apparatuses employ only a total of four male-threaded members (20) for securing the supporting members, a total of two male-threaded members (21) for securing the main bodies of the fluid control devices, a total of four male-threaded members (32) for securing the mass-flow controller and a total of four male-threaded members (32) for securing the joints, thereby improving the efficiency of the assembling operations, in comparison with conventional fluid control apparatuses which have employed two or four male-threaded members for mounting flow-path blocks, manual valves and shut-off valves.

Further, while the embodiments have been described by exemplifying a process gas and a purge gas as fluids, the fluids for use in the fluid control apparatus are not limited to these gasses.

### INDUSTRIAL APPLICABILITY

The fluid control apparatus according to the present invention can be utilized as a fluid control apparatus for use in a semiconductor fabrication apparatus and can reduce the number of components thereby reducing the cost and improving the efficiency of the assembling operations, while maintaining the performance regarding the space occupied by the apparatus and the volumes of the flow paths at the same level as conventional apparatuses.

## Claims

1. A fluid control apparatus comprising a plurality of fluid control devices having a block-shaped main body having a flow path formed therethrough and a supporting member for supporting the plurality of fluid control devices placed in serial,
wherein the supporting member is provided with raised portions at opposite end portions thereof, the main bodies of the plurality of fluid control devices are placed between the raised portions of the supporting member such that the openings of the flow paths therein are butted against one another, and a main-body securing male-threaded member penetrated through one of the raised portions in a longitudinal direction is screwed thereinto, so that the main bodies of the plurality of fluid control devices are mounted to the supporting member.

2. A fluid control apparatus comprising an adjustment device for adjusting the pressure or a flow rate of a fluid, an inlet shutoff/open device provided near an inlet of the adjustment device, and an outlet shutoff/open device provided near an outlet of the adjustment device, the inlet shutoff/open device comprising a plurality of fluid control devices having a block-shaped main body having a flow path formed therethrough and an inlet supporting member for supporting the plurality of fluid control devices placed in serial, and the outlet shutoff/open device comprising a plurality of fluid control devices having a block-shaped main body having a flow path formed therethrough and an outlet supporting member for supporting the plurality of fluid control devices placed in serial,
wherein the respective supporting members are provided with raised portions at their opposite end portions, the main bodies of the plurality of fluid control devices are placed between the raised portions of the respective supporting members such that the openings of the flow paths therein are butted against one another, a main-body securing male-threaded member penetrated through the raised portion of the inlet supporting member at the end portion at the opposite side thereof from the adjustment device in the longitudinal direction is screwed thereinto so that the main bodies of the plurality of fluid control devices near the inlet of the adjustment device are mounted to the inlet supporting member, and a main-body securing male-threaded member penetrated through the raised portion of the outlet supporting member at the end portion at the opposite side thereof from the adjustment device in the longitudinal direction is screwed thereinto so that the main bodies of the plurality of fluid control devices near the outlet of the adjustment device are mounted to the outlet supporting member.

3. The fluid control apparatus according to Claim 2, wherein the adjustment device comprises an adjustment-device main body and secondary flow-path blocks provided to be protruded from the inlet and the outlet of the adjustment-device main body, the fluid control devices closest to the adjustment device, out of the plurality of fluid control devices near the inlet and the outlet of the adjustment device, are formed to be adjustment-device connection flow-path blocks, and the respective secondary flow-path blocks of the adjustment device are supported by the adjustment-device connection flow-path blocks and mounted thereto through adjustment-device securing male-threaded members thereabove.

4. The fluid control apparatus according to Claim 1 or 2, wherein the supporting member is slidably mounted to a rail, and supporting-member securing male-threaded members penetrated through the raised portion which is not provided with the main-body securing male-threaded member in a direction of the raise are screwed thereinto, so that the supporting member is mounted to the rail.

5. The fluid control apparatus according to Claim 1 or 2, wherein a pressing block provided with no flow path is interposed between the raised portion through which the main-body securing male-threaded member is screwed and the fluid control device closest to the raised portion.

6. The fluid control apparatus according to Claim 1 or 2, wherein positioning convex portions are formed on a butting surface of one of the main bodies of each adjacent pair of fluid control devices, while concave portions to be fitted with the convex portions are formed on the butting surface of the other main body.

7. The fluid control apparatus according to Claim 1 or 2, wherein a disengagement prevention plate for preventing the disengagement of the fluid control devices in a widthwise direction is mounted to at least one of side surfaces of the plate-shaped portion of the supporting member.

8. The fluid control apparatus according to Claim 1 or 2, wherein flow paths are provided in two stages which are upper and lower stages, at least at a single position, in the main bodies of each adjacent pair of fluid control devices, the flow paths are connected to each other with a sealing portion interposed therebetween, and the main-body securing male-threaded member is placed such that it pushes just the center portions of the sealing portions in the two stages which are the upper and lower stages.

9. The fluid control apparatus according to Claim 8, wherein only a flow path in an upper stage is provided through at least one of each adjacent pair of fluid control devices while no flow path in a lower stage is provided therein, the flow paths in the upper stage in each adjacent pair of fluid control devices are connected to each another with a sealing portion interposed therebetween, and there is provided a dummy sealing portion having the same shape as that of the sealing portion in the upper stage in order to strike a balance therebetween, at the positions on butting surfaces of both the fluid control devices which are coincident with the sealing portion in the lower stage.

10. The fluid control apparatus according to Claim 3, wherein the inlet shutoff/open device comprises a purge-gas shutoff valve comprising a main body having a valve chamber opened at its upper surface and an actuator for bringing a valve member into contact with a valve seat within the valve chamber and separating the valve member from the valve seat, the purge-gas shutoff valve being adjacent to the adjustment-device flow-path block, and, in the main body of the purge-gas shutoff valve, there are provided a through flow path which is penetrated.through the main body in the direction from the inlet to the outlet, is constantly communicated with the flow path in the adjustment-device connection flow-path block and is used as a process-gas introducing flow path and as a process-gas/purge-gas ejecting flow path, a purge-gas introducing flow path which is opened at its one end to a portion spaced apart from the valve chamber above the main body and is communicated at its other end to the valve chamber, and a purge-gas ejecting flow path which is branched from the through flow path, is communicated with the valve chamber and is adapted such that the communication between the purge-gas ejecting flow path and the purge-gas introducing flow path is established and intercepted by the actuator.

11. The fluid control apparatus according to Claim 3, wherein the inlet shutoff/open device comprises a purge-gas shutoff valve comprising a main body having a valve chamber opened at its upper surface and an actuator for bringing a valve member into contact with a valve seat within the valve chamber and separating the valve member from the valve seat, the purge-gas shutoff valve being adjacent to the adjustment-device flow-path block, and, in the main body of the purge-gas shutoff valve, there are provided a process-gas introducing upper-stage flow path which is opened at its one end to the inlet and is communicated at the other end to the valve chamber, a purge-gas introducing lower-stage flow path which is opened at its one end to the inlet below the process-gas introducing flow path and is communicated at the other end to the valve chamber, and a process-gas/purge-gas ejecting flow path which is communicated at its one end to the valve chamber and is opened at the other end to the outlet, the process-gas introducing upper-stage flow path and the ejecting flow path are constantly communicate with each other, while the communication between the purge-gas introducing lower-stage flow path and the ejecting flow path is established and intercepted by the actuator.
